# EUROPÄISCHE PATENTSCHRIFT

(11) **EP 2 754 571 B1**
(45) Veröffentlichungstag und Bekanntmachung des Hinweises auf die Patenterteilung: **28.06.2017**
(21) Anmeldenummer: 13197609.4
(22) Anmeldetag: 17.12.2013
(51) Int. Cl.: B60D 5/00, B61D 17/22

(54) **Balg eines Übergangs eines Gelenkfahrzeugs sowie Gelenkfahrzeug des öffentlichen Personentransports mit einem solchen Balg**
Bellows for coupling an articulated vehicle and public passenger transport articulated vehicle with such a bellows
Soufflet de jonction d'un véhicule articulé et véhicule articulé doté d'un tel soufflet pour le transport public de personnes

(30) Priorität: 09.01.2013 DE 202013000165 U
(43) Veröffentlichungstag der Anmeldung: 16.07.2014
(73) Patentinhaber: Hübner GmbH & Co. KG, 34123 Kassel (DE)
(72) Erfinder: Jünke, Volker, 34123 Kassel (DE); Hübner, Reinhard, 34130 Kassel (DE)
(74) Vertreter: Patentanwälte Walther Hinz Bayer PartGmbB

(56) Entgegenhaltungen:
- DE-A1- 2 555 845
- DE-A1- 19 802 123
- DE-A1-102006 061 503

## Beschreibung

Die Erfindung betrifft einen Balg eines Übergangs eines Gelenkfahrzeugs, wobei das Gelenkfahrzeug mindestens zwei gelenkig miteinander verbundene Fahrzeugteile aufweist, z. B. ein Schienenfahrzeug oder ein Gelenkbus, wobei der Balg auf der Außenseite eine elastische Hülle aufweist.

Gegenstand der Erfindung ist ebenfalls ein Gelenkfahrzeug des öffentlichen Personentransportes mit einem solchen Balg.

Ein Übergang bei einem Straßen- oder Schienenfahrzeug setzt sich aus mindestens einem Balg und einer von dem Balg tunnelförmig umgebenen Plattform und Brücke zusammen, die Personen das Hinüberwechseln zwischen den Fahrzeugteilen eines Gelenkfahrzeugs ermöglicht. Insbesondere bei Gelenkbussen umgibt der Balg nicht nur die Plattform, sondern auch das Gelenk zwischen den Fahrzeugteilen.

Insbesondere auch bei Hochgeschwindigkeitszügen ist zwischen den beiden gelenkig miteinander verbundenen Fahrzeugteilen als Teil des Übergangs ein innerer und ein äußerer Balg vorgesehen, wobei der äußere Balg den inneren Balg beabstandet umgibt. Eine solche Konstruktion wird gewählt, um die bei hohen Geschwindigkeiten z. B. bei Einfahrt in einen Tunnel auftretenden erheblichen Druckstöße gegenüber dem Innenraum zu dämpfen. Nachteilig bei einer bekannten Konstruktion zweier ineinander gelagerter Bälge ist, dass der äußere Balg einen erheblichen radialen Abstand zur Wagenkastenwand aufweist, was insbesondere bei hohen Geschwindigkeiten zu einer Wirbelbildung im Bereich des Balges führt, was sich nachteilig auf die Aerodynamik des Zuges auswirkt. Insofern ist aus der EP 2 353 894 A1 nicht nur bekannt den äußeren Balg im Bereich der jeweiligen Wagenkastenwand zweier gelenkig miteinander verbundener Fahrzeuge umlaufend anzuordnen, sondern darüber hinaus auch in neutraler Stellung des Balges, also dann, wenn sich die beiden Fahrzeuge in einer Ebene befinden, einen Wellenbalg vorzusehen, dessen wellenartige, U-förmige Balgelemente im Querschnitt im Wesentlichen rechtwinklig mit planarem Steg ausgebildet sind, sodass sich bei Geradeausfahrt eine im Wesentlichen vollständig ebene Außenwandung des Wellenbalges ergibt. Das heißt, es entstehen im Wesentlichen keine oder nur geringfügige Wirbel, wie dies im Gegensatz dazu der Fall ist, wenn die den Wellenbalg bildenden Balgelemente tatsächlich wellenförmig also im Querschnitt eine gerundete Kontur aufweisen.

Allerdings setzt die Wirbelbildung bei derartigen Bälgen, deren Balgelemente im Querschnitt im Wesentlichen rechteckförmig sind unmittelbar dann ein, wenn derartige Fahrzeuge oder Züge selbst nur kleine Kurven durchfahren, da sich dann auf der Kurvenaußenseite Abstände zwischen den einzelnen Balgelementen ergeben. Auf der Kurveninnenseite kommt es zu einer Stauchung des Balges, was dazu führt, dass die Balgelemente im Bereich des Steges sich leicht auswölben.

In diesem Zusammenhang ist aus der DE 25 55 845 A1 eine Abdeckung auf der Außenseite eines Faltenbalges bekannt. Die Abdeckung besteht aus einzelnen, elastischen und untereinander verbundenen Abdeckelementen. Diese Abdeckelemente bilden eine im Wesentlichen ebene Außenfläche auf dem Balg.

Die der Erfindung zugrunde liegende Aufgabe besteht demzufolge darin eine Wirbelbildung auf der Außenseite des Balges unabhängig von der jeweiligen Fahrsituation, d. h. unabhängig davon, ob der Zug sich in Geradeausfahrt befindet oder eine Kurve durchfährt, zu vermeiden.

Zur Lösung der Aufgabe wird erfindungsgemäß vorgeschlagen, dass die elastische Hülle auf dem Balg unter Spannung aufliegt. Wenn demzufolge die elastische oder flexible Hülle unter Spannung an dem Balg anliegt, so befindet sich die Hülle im gedehnten Zustand. Das Maß der Dehnung ist hierbei vorteilhaft so gewählt, dass bei Kurvenfahrt die Hülle auf dem Balg auf der Kurveninnenseite keine Falten bildet. Das heißt weiterhin, dass die Hülle den Balg ähnlich einem Strumpf umgibt.

Stellt man sich in diesem Zusammenhang vor, dass der Balg aus einzelnen wellenförmigen Balgelementen besteht, also Elemente, die im Querschnitt im Wesentlichen durch eine runde Außenwölbung gekennzeichnet sind, dann wird durch die Hülle die wellenförmige Außenkontur des Balges abgedeckt, mit der Folge, dass der Balg sich in seiner äußeren Erscheinung als vollständig ebenes Gebilde darstellt. Eine Wirbelbildung wird hierdurch vermieden. Eine solche Hülle ist nicht nur einsetzbar bei Wellenbälgen, sondern auch bei Faltenbälgen.

Vorteilhafte Merkmale und Ausgestaltungen der Erfindung ergeben sich aus den Unteransprüchen.

Die Hülle ist aus einem elastischen oder flexiblen Material ausgebildet, wobei die Hülle in Richtung der Längsachse und/oder quer zur Längsachse der Hülle dehnfähig ist. Hieraus wird deutlich, dass die Hülle, die sich vorteilhaft über die gesamte Länge des Balges erstreckt, und auch vorteilhaft den Balg komplett umlaufend umgibt, auch unter insbesondere einer Spannung in Längsrichtung der Fahrzeuge derart steht, dass bei Durchfahren von Kurven selbst auf der Kurveninnenseite des Balges die Hülle keine Falten schlägt, wie dies bereits erläutert wurde, die Dehnfähigkeit aber gleichzeitig derart bemessen ist, dass es auf der Außenseite zu keinen Schädigungen an der Hülle aufgrund von Überdehnung kommt. Parallel dazu kann die Hülle auch unter radialer Spannung an dem Balg anliegen. In diesem Zusammenhang hat sich insbesondere als vorteilhaft herausgestellt, wenn als Material für die Hülle ein Stoff Verwendung findet, der aus einem Gewebe, Gewirk oder Gestrick ausgebildet ist. Die Dehnfähigkeit eines Gewirkes oder Gestrickes ergibt sich unmittelbar daraus, dass es sich hierbei um eine Maschenware handelt. Zusätzlich können allerdings, wie bei einem Gewebe auch die Fäden oder Garne aus einem elastischen Material hergestellt sein, also eine bestimmte Dehnfähigkeit aufweisen. In diesem Zusammenhang ist insbesondere vorgesehen, dass Fäden für den Stoff aus vernetzten Silikonkautschuk Verwendung finden, die Modulwerte im Bereich von 20 bis 100 cN/800 % Dehnung, insbesondere im Bereich von 20 bis 80 cN/100 % Dehnung aufweisen. Bei einem Gewebe können sowohl Kett- als auch Schussfäden aus einem solchen elastischen Material hergestellt sein, wenn es allerdings ausreichend sein sollte, lediglich eine Elastizität in eine Richtung bereitzustellen, besteht auch die Möglichkeit entweder die Schuss- oder die Kettfäden als dehnfähige Fäden im obigen Sinne auszubilden.

Nach einem besonderen Merkmal der Erfindung ist vorgesehen, dass der Stoff mit einem Elastomer beschichtet ist. Die Beschichtung mit einem Elastomer, z. B. einem Silikonkautschuk, einem EPDM, einem CSM oder anderen Elastomeren, hat den Vorteil, dass die Hülle hierdurch dicht, insbesondere luft- und feuchtigkeitsdicht gestaltet werden kann. Allerdings wird an dieser Stelle darauf hingewiesen, dass eine solche dichte Gestaltung der Hülle nicht unbedingt notwendig ist, da für die Verhinderung der Wirbelbildung es völlig ausreichend ist, wenn durch die aus einem Stoff ausgebildete Hülle eine glatte Oberfläche auf dem Balg erzeugt wird.

Nach einem weiteren Merkmal ist die Hülle auf dem Balg fixierbar. Bei schneller Fahrt hat aufgrund von Sogwirkung die Hülle das Bestreben, sich vom Balg abzuheben, d. h., dass die Hülle nach außen ausbaucht. Um ein solches Ausbauchen zu verhindern, ist nach einem weiteren Merkmal der Erfindung vorgesehen, dass die Hülle auf dem Balg fixierbar ist. Das heißt, dass die Hülle nicht nur endseitig, d. h. im Bereich der Stirnseite der Wagenkästen entweder mit dem Balg oder dem jeweiligen Wagenkasten verbunden ist, sondern auch über die Länge der Hülle eine Verbindung mit dem Balg bestehen kann. Insofern kann vorgesehen sein, die Hülle im Bereich einer jeden Welle oder Falte mit dem Balg zu verbinden, oder auch nur beispielsweise jede zweite oder dritte Welle oder Falte für die Verbindung mit der Hülle vorzusehen.

Gegenstand der Erfindung ist ebenfalls ein Fahrzeug des öffentlichen Personentransports, gekennzeichnet durch einen Balg gemäß mindestens einem der Ansprüche 1 bis 14.

Anhand der Zeichnungen wird die Erfindung nachstehend beispielhaft näher erläutert.
- Fig. 1: zeigt schematisch ein zweigliedriges Fahrzeug, wobei die beiden Fahrzeugteile durch einen Übergang mit einem Balg miteinander verbunden sind.
- Fig. 2: zeigt einen Schnitt gemäß der Linie II-II aus Fig. 1;
- Fig. 3: zeigt einen Schnitt gemäß der Linie III-III aus Fig. 2;

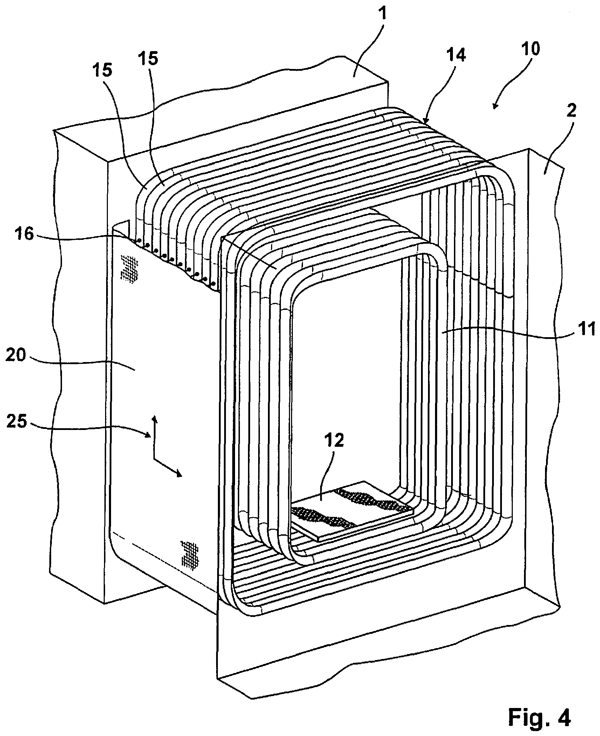

- Fig. 4: zeigt den Übergang schematisch in einer perspektivischen Darstellung.

Das aus zwei gelenkig miteinander verbundenen Fahrzeugteilen 1 und 2 ausgebildete Gelenkfahrzeug 3 weist den Übergang 10 auf, wobei sich örtlich unter dem Übergang 10 das die beiden Fahrzeugteile 1 und 2 verbindende Gelenk oder die Kupplung 5 befindet.

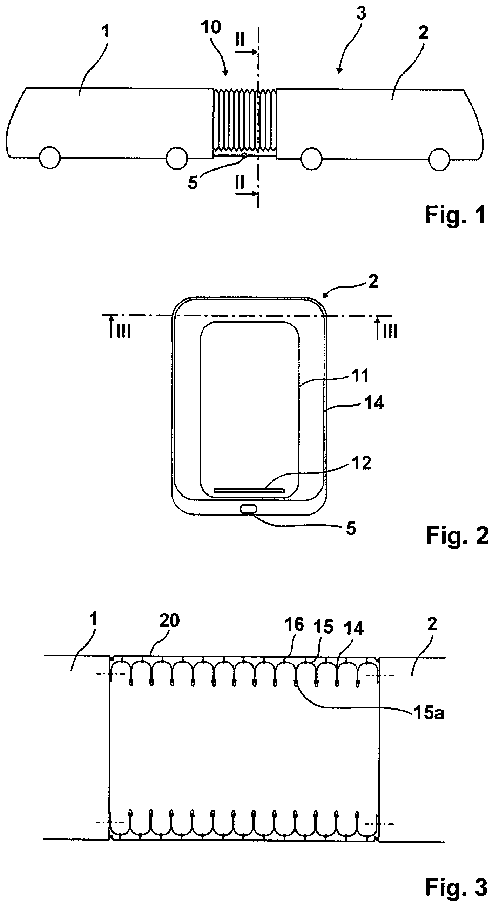

Gegenstand der Erfindung ist nun die Ausbildung des äußeren Balges 14 des Übergangs 10. In diesem Zusammenhang wird nun zunächst auf die Fig. 2 verwiesen, wobei aus der Fig. 2, die einen Schnitt gemäß der Linie II-II aus Fig. 1 zeigt, der innere Balg 11 und der äußere Balg 14 erkennbar sind. Der äußere Balg 14 erstreckt sich im Bereich der Seitenwände und des Daches dem Konturverlauf des Wagenkastens des Fahrzeugteiles 2 folgend.

Aus Fig. 2 ist ebenfalls die Übergangsbrücke oder-plattform 12 innerhalb des inneren Balges 11 erkennbar, die ein Hinüberwechseln von Personen zwischen den Fahrzeugteilen 1 und 2 ermöglicht.

Gegenstand der Erfindung ist nun die Ausbildung des äußeren Balges 14 gemäß Fig. 3, wobei in dieser Darstellung der innere Balg 11 der besseren Übersichtlichkeit wegen weggelassen ist. Der äußere Wellenbalg 14 setzt sich aus einzelnen wellenförmigen Balgelementen 15 zusammen, die durch Balgrahmen 15a miteinander verbunden sind. Der äußere Balg 14, der endseitig an den Wagenkästen der beiden Fahrzeugteile 1 und 2 befestigt ist, ist durch eine Hülle 20 umgeben, die aus einem dehnbaren Stoff ausgebildet ist. Die Hülle ist sowohl in Richtung der Längsachse des Balges oder der Hülle als auch in Richtung quer zur Längsachse des Balges oder der Hülle entsprechend den Pfeilen 25 dehnfähig. Das heißt, dass die Hülle 20 ähnlich einem Strumpf unter Spannung über den äußeren Balg gezogen wird, und im Bereich der Scheitel der einzelnen Wellenelemente mit dem Balg durch Stege 16 in Verbindung steht. Die Stege 16 zur Verbindung der Hülle 20 mit dem Balg sind am Balg umlaufend in bestimmten Abständen vorgesehen. Die Länge der Stege ist variabel. Vorteilhaft strebt die Länge des Steges gegen Null, d. h., der Steg verbindet die Hülle unmittelbar mit dem Balg. Der Steg 16 kann hierbei durch Nähen oder Kleben erzeugt werden.

### Bezugszeichenliste:

- 1: Fahrzeugteile
- 2: Fahrzeugteile
- 3: Gelenkfahrzeug
- 5: Gelenk oder Kupplung
- 10: Übergang
- 11: Innerer Balg
- 14: Äußerer Balg
- 15: Wellenförmiges Balgelement
- 15a: Balgrahmen
- 16: Steg
- 20: elastische Hülle

## Patentansprüche

1. Balg (14) eines Übergangs (10) eines Gelenkfahrzeugs (3), wobei das Gelenkfahrzeug mindestens zwei gelenkig miteinander verbundene Fahrzeugteile (1, 2) aufweist, wobei der Balg (14) auf der Außenseite eine elastische Hülle aufweist,
**dadurch gekennzeichnet,**
**dass** die elastische Hülle auf dem Balg (14) unter Spannung aufliegt.

2. Balg (14) eines Übergangs (10) eines Gelenkfahrzeugs (3) nach Anspruch 1,
**dadurch gekennzeichnet,**
**dass** die elastische Hülle (20) auf dem Balg (14) fixierbar ist.

3. Balg (14) eines Übergangs (10) eines Gelenkfahrzeugs (3) nach Anspruch 2,
**dadurch gekennzeichnet,**
**dass** die elastische Hülle (20) auf dem Balg (14) durch Stege (16) fixierbar ist.

4. Balg (14) eines Übergangs (10) eines Gelenkfahrzeugs (3) nach einem der voranstehenden Ansprüche,
**dadurch gekennzeichnet,**
**dass** sich die elastische Hülle (20) über die Länge des Balges (14) erstreckt.

5. Balg (14) eines Übergangs (10) eines Gelenkfahrzeugs (3) nach einem der voranstehenden Ansprüche,
**dadurch gekennzeichnet,**
**dass** die elastische Hülle (20) den Balg (14) umlaufend umgibt.

6. Balg (14) eines Übergangs (10) eines Gelenkfahrzeugs (3) nach einem der voranstehenden Ansprüche,
**dadurch gekennzeichnet,**
**dass** die elastische Hülle (20) in axialer Richtung der Hülle (20) dehnfähig ist.

7. Balg (14) eines Übergang (10) eines Gelenkfahrzeugs (3) nach einem der voranstehenden Ansprüche,
**dadurch gekennzeichnet,**
**dass** die elastische Hülle (20) quer zur Längsachse der Hülle (20) dehnfähig ist.

8. Balg (14) eines Übergang (10) eines Gelenkfahrzeugs (3) nach einem der voranstehenden Ansprüche,
**dadurch gekennzeichnet,**
**dass** die elastische Hülle (20) einen Stoff aufweist.

9. Balg (14) eines Übergang (10) eines Gelenkfahrzeugs (3) nach Anspruch 8,
**dadurch gekennzeichnet,**
**dass** der Stoff ein Gewebe, Gewirk oder Gestrick aufweist.

10. Balg (14) eines Übergangs (10) eines Gelenkfahrzeugs (3) nach einem der Ansprüche 8 oder 9,
**dadurch gekennzeichnet,**
**dass** der Stoff dehnfähige Fäden oder Garne aufweist.

11. Balg (14) eines Übergangs (10) eines Gelenkfahrzeugs (3) nach einem der Ansprüche 8 bis 10,
**dadurch gekennzeichnet,**
**dass** der Stoff mit einem Elastomer beschichtet ist.

12. Balg (14) eines Übergangs (10) eines Gelenkfahrzeugs (3) nach einem der voranstehenden Ansprüche,
**dadurch gekennzeichnet,**
**dass** die Hülle (20) endseitig mit dem Fahrzeug (1, 2) verbindbar ist.

13. Balg (14) eines Übergangs (10) eines Gelenkfahrzeugs (3) nach einem der Ansprüche 10 bis 12,
**dadurch gekennzeichnet,**
**dass** die Fäden oder Garne einen vernetzten Silikonkautschuk aufweisen.

14. Gelenkfahrzeug (3) des öffentlichen Personentransports,
**gekennzeichnet durch**,
einen Balg (14) gemäß mindestens einem der voranstehenden Ansprüche 1 bis 13.

## Claims

1. A bellows (14) of a gangway (10) of an articulated vehicle (3), wherein the articulated vehicle has at least two articulately connected vehicle parts (1, 2), wherein the bellows (14) has an elastic sheath on its outer side,
**characterized in that**
the elastic sheath rests on the bellows (14) under tension.

2. The bellows (14) of a gangway (10) of an articulated vehicle (3) according claim 1,
**characterized in that**
the elastic sheath (20) is adapted to be fastened on the bellows (14).

3. The bellows (14) of a gangway (10) of an articulated vehicle (3) according to claim 2,
**characterized in that**
the elastic sheath (20) is adapted to be fastened on the bellows (14) by webs (16).

4. The bellows (14) of a gangway (10) of an articulated vehicle (3) according to one of the afore-mentioned claims,
**characterized in that**
the elastic sheath (20) extends along the length of the bellows (14).

5. The bellows (14) of a gangway (10) of an articulated vehicle (3) according to one of the afore-mentioned claims,
**characterized in that**
the elastic sheath (20) circumferentially encloses the bellows (14).

6. The bellows (14) of a gangway (10) of an articulated vehicle (3) according to one of the afore-mentioned claims,
**characterized in that**
the elastic sheath (20) is extensible in the axial direction of the sheath (20).

7. The bellows (14) of a gangway (10) of an articulated vehicle (3) according to one of the afore-mentioned claims,
**characterized in that**
the elastic sheath (20) is extensible transversely to the longitudinal axis of the sheath (20).

8. The bellows (14) of a gangway (10) of an articulated vehicle (3) according to one of the afore-mentioned claims,
**characterized in that**
the elastic sheath (20) comprises a fabric.

9. The bellows (14) of a gangway (10) of an articulated vehicle (3) according claim 8,
**characterized in that**
the fabric comprises a woven fabric, a warp-knitted fabric or a weft-knitted fabric.

10. The bellows (14) of a gangway (10) of an articulated vehicle (3) according to one of the claims 8 or 9,
**characterized in that**
the fabric comprises extensible threads or yarns.

11. The bellows (14) of a gangway (10) of an articulated vehicle (3) according to one of the claims 8 to 10,
**characterized in that**
the fabric is coated with an elastomer.

12. The bellows (14) of a gangway (10) of an articulated vehicle (3) according to one of the afore-mentioned claims,
**characterized in that**
the sheath (20) is connectable at its end to the vehicle (1, 2).

13. The bellows (14) of a gangway (10) of an articulated vehicle (3) according to one of the claims 10 to 12,
**characterized in that**
the threads or yarns comprise a reticulated silicone rubber.

14. An articulated vehicle (3) for public passenger transport,
**characterized by**
a bellows (14) according to at least one of the afore-mentioned claims 1 to 13.

## Revendications

1. Soufflet (14) d'un passage d'intercirculation (10) d'un véhicule articulé (3), où le véhicule articulé comprend au moins deux parties de véhicule (1, 2) reliées l'une à l'autre de manière articulée, où le soufflet (14) comprend une gaine élastique sur son côté extérieur,
**caractérisé en ce que**
la gaine élastique repose sous tension sur le soufflet (14).

2. Soufflet (14) d'un passage d'intercirculation (10) d'un véhicule articulé (3) selon la revendication 1,
**caractérisé en ce que**
la gaine élastique (20) est adaptée pour être fixée sur le soufflet (14).

3. Soufflet (14) d'un passage d'intercirculation (10) d'un véhicule articulé (3) selon la revendication 2,
**caractérisé en ce que**
la gaine élastique (20) est adaptée pour être fixée sur le soufflet (14) par des traverses (16).

4. Soufflet (14) d'un passage d'intercirculation (10) d'un véhicule articulé (3) selon l'une des revendications précédentes,
**caractérisé en ce que**
la gaine élastique (20) s'étend sur la longueur du soufflet (14).

5. Soufflet (14) d'un passage d'intercirculation (10) d'un véhicule articulé (3) selon l'une des revendications précédentes,
**caractérisé en ce que**
la gaine élastique (20) entoure le soufflet (14) sur sa circonférence.

6. Soufflet (14) d'un passage d'intercirculation (10) d'un véhicule articulé (3) selon l'une des revendications précédentes,
**caractérisé en ce que**
la gaine élastique (20) est extensible dans la direction axiale de la gaine (20).

7. Soufflet (14) d'un passage d'intercirculation (10) d'un véhicule articulé (3) selon l'une des revendications précédentes,
**caractérisé en ce que**
la gaine élastique (20) est extensible transversalement à l'axe longitudinal de la gaine (20).

8. Soufflet (14) d'un passage d'intercirculation (10) d'un véhicule articulé (3) selon l'une des revendications précédentes,
**caractérisé en ce que**
la gaine élastique (20) comporte une étoffe.

9. Soufflet (14) d'un passage d'intercirculation (10) d'un véhicule articulé selon la revendication 8,
**caractérisé en ce que**
l'étoffe comprend un tissu, un tricot en trame ou un tricot en chaîne.

10. Soufflet (14) d'un passage d'intercirculation (10) d'un véhicule articulé (3) selon l'une des revendications 8 ou 9,
**caractérisé en ce que**
l'étoffe comprend des fils ou morceaux de fil extensibles.

11. Soufflet (14) d'un passage d'intercirculation (10) d'un véhicule articulé (3) selon l'une des revendications 8 à 10,
**caractérisé en ce que**
l'étoffe est revêtue d'un élastomère.

12. Soufflet (14) d'un passage d'intercirculation (10) d'un véhicule articulé (3) selon l'une des revendications précédentes,
**caractérisé en ce que**
la gaine (20) est adaptée pour être connectée au véhicule (1, 2) à son extrémité.

13. Soufflet (14) d'un passage d'intercirculation (10) d'un véhicule articulé (3) selon l'une des revendications 10 à 12,
**caractérisé en ce que**
les fils ou morceaux de fil comprennent un caoutchouc réticulé.

14. Véhicule articulé (3) de transport en commun,
**caractérisé par**
un soufflet (14) selon au moins une des revendications précédentes 1 à 13.
